# EUROPEAN PATENT APPLICATION

(11) **EP 4 757 279 A1**
(43) Date of publication of application: **10.06.2026**
(21) Application number: 25794849.7
(22) Date of filing: 13.02.2025
(51) Int. Cl.: H04L 61/3015, H01M 10/42, H01M 10/44, H02J 7/00, H04L 12/40

(54) **BATTERY SYSTEM AND INTERWORKING METHOD IN BATTERY SYSTEM**

(30) Priority: 23.04.2024 KR 20240054160
(71) Applicant: LG ENERGY SOLUTION, LTD., Seoul 07335 (KR)
(72) Inventor: KIM, Wonhee, Daejeon 34122 (KR)
(74) Representative: BCKIP Part mbB
(86) International application number: PCT/KR2025/002116
(87) International publication number: WO 2025/225849

(57) **Abstract**

A battery system according to an embodiment of the present invention comprises: lower control devices that individually control a plurality of batteries; and an upper control device that manages the plurality of lower control devices, wherein at least one of the lower control devices may identify the operating state of the battery system, and when the battery system is initialized and operating, may identify an identifier pre-stored in a storage space and perform initialization by itself.

## Description

### [Technical Field]

This application claims priority to and the benefit of Korean Patent Application No.10-2024-0054160 filed in the Korean Intellectual Property Office on April 23, 2024 the entire contents of which are incorporated herein by reference.

The present invention relates to a battery system and a method of interworking in a battery system, and more particularly, to a battery system for interworking between control apparatuses in a battery system and a method of operating the same.

### [Background Art]

An energy storage system (ESS) is a system that links renewable energy, batteries that store electricity, and existing power grid.

Recently, as smart grids and renewable energy are being expanded and the efficiency and stability of the power grid are being emphasized, demand for energy storage systems is increasing.

In general, an energy storage system is provided as a battery system consisting of at least one battery pack and a battery rack.

In a battery system, battery management devices (BMS) individually accommodated in at least one battery pack or battery rack communicate with each other to manage the batteries. Accordingly, it is essentially required to assign an identifier of the battery management device for battery management during the initial operation of the battery system.

Meanwhile, if an unexpected problem occurs in a specific battery management device during the operation of the battery system, a conventional battery system diagnoses the status of a specific battery management device and restarts the system based on normal battery racks, excluding a specific battery rack corresponding to the specific battery management device with the problem. Accordingly, in conventional battery systems, there is a disadvantage that energy efficiency is reduced by the amount of energy corresponding to the excluded specific battery rack.

Accordingly, recently, in order to prevent energy efficiency reduction, if an unexpected problem occurs in a specific battery management device during the operation of the battery system, a technology is provided to replace the specific battery rack with a new battery rack and apply it, or to reconnect the excluded specific battery rack after inspection, and then re-operate the battery system.

However, in order to assign an identifier to a replaced or reconnected battery rack, initialization of the entire battery system is essential. Therefore, this technology also has a disadvantage that the battery system cannot be used during the time when initialization for identifier assignment of the battery racks is in progress.

### [Detailed Description of the Invention]

### [Technical Problem]

To obviate one or more problems of the related art, embodiments of the present disclosure provide a battery system.

To obviate one or more problems of the related art, embodiments of the present disclosure also provide an interworking method in a battery system.

### [Technical Solution]

In order to achieve the objective of the present disclosure, a battery system may include a plurality of lower control apparatuses that individually control a plurality of batteries; and an upper control apparatus that manages the plurality of lower control apparatuses, wherein at least one of the plurality of lower control apparatuses determines an operation state of the battery system, and upon the battery system initialized and in operation, performs initialization by itself and set an identifier for itself which is pre-stored in a storage space.

The identifier may be an identifier assigned when the battery system is initialized.

The lower control apparatus may receive an initialization command from the upper control apparatus and performs initialization, when the battery system is in an uninitialized state.

The lower control apparatus may receive an identifier assigned from the upper control apparatus when the battery system is in the uninitialized state and perform initialization by the initialization command from the upper control apparatus.

The lower control apparatus may update and store the identifier assigned from the upper control apparatus in the storage space.

The initialization command may be transmitted from the upper control apparatus after identifier assignment of the lower control apparatuses by the upper control apparatus is completed.

The lower control apparatus may receive at least one command from the upper control apparatus through a physical internal signal (hardwired signal) or a communication signal.

The upper control apparatus may individually receive battery information from the lower control apparatuses in the battery system when the initialization of the lower control apparatuses is completed, and compare information of a specific battery corresponding to the lower control apparatus whose initialization is completed, with the battery information of the lower control apparatuses, and controls the specific battery to be charged or discharged.

The upper control apparatus may control the specific battery to be charged when a voltage of the battery corresponding to the lower control apparatus is within a predetermined threshold range based on voltages of the plurality of batteries corresponding to a plurality of lower control apparatuses excluding the battery corresponding to the lower control apparatus.

The plurality of batteries may be provided in a structure connected in parallel.

According to another embodiment of the present disclosure, an interworking method, in a battery system including a plurality of lower control apparatuses and an upper control apparatus that manages the plurality of lower control apparatuses, may include determining, by at least one of the plurality of lower control apparatuses, an operation state of the battery system, and upon the battery system initialized and in operation, performing, by the at least one of the plurality of lower control apparatuses, initialization by itself and setting an identifier for itself which is pre-stored in a storage space.

The identifier may be an identifier assigned when the battery system is initialized.

The method may further include receiving an initialization command from the upper control apparatus and performing, by the lower control apparatus, initialization, when the battery system is in an uninitialized state.

The performing, by the lower control apparatus, initialization may include receiving an identifier assigned from the upper control apparatus when the battery system is in the uninitialized state; and performing, by the lower control apparatus, initialization by the initialization command from the upper control apparatus.

The performing, by the lower control apparatus, initialization may include updating and storing, by the lower control apparatus, the identifier assigned from the upper control apparatus in the storage space.

The initialization command may be transmitted from the upper control apparatus after identifier assignment of the lower control apparatuses by the upper control apparatus is completed.

The lower control apparatus may receive at least one command from the upper control apparatus through a physical internal signal (hardwired signal) or a communication signal.

The method may further include, when the initialization of the lower control apparatuses is completed, receiving, by the upper control apparatus individually, battery information from the lower control apparatuses in the battery system, and comparing, by the upper control apparatus, information of a specific battery corresponding to the lower control apparatus whose initialization is completed, with the battery information of the lower control apparatuses, and controlling the specific battery to be charged or discharged.

The controlling the specific battery may include controlling the specific battery to be charged when a voltage of the battery corresponding to the lower control apparatus is within a predetermined threshold range based on voltages of the plurality of batteries corresponding to a plurality of lower control apparatuses excluding the battery corresponding to the lower control apparatus.

The plurality of batteries may be provided in a structure connected in parallel.

### [Advantageous Effects]

A battery system and an interworking method in the battery system according to embodiments of the present invention, when a lower control apparatus is reset due to an unexpected abnormality occurring in a battery system, the lower control apparatus is initialized by itself and linked using identifier information pre-stored in the lower control apparatus without initializing the entire battery system, thereby preventing battery system use from being interrupted and improving energy efficiency.

### [Brief Description of theDrawings]

FIG. 1 is a block diagram of an energy storage system to which the present invention may be applied.
FIG. 2 is a block diagram of a battery system according to embodiments of the present invention.
FIG. 3 is a block diagram of an upper control apparatus according to embodiments of the present invention.
FIG. 4 is a block diagram of a lower control apparatus according to embodiments of the present invention.
FIG. 5 is a flowchart for explaining an interworking method in a battery system according to embodiments of the present invention.
FIG. 6 is a flowchart for explaining an interworking method in a battery system when the battery system is in an uninitialized state according to embodiments of the present invention.
FIG. 7 is a flowchart for explaining an interworking method in a battery system when the initialization of the battery system is completed according to embodiments of the present invention.

| | | | |
|---|---|---|---|
| 10: | BMS | 20: | BSC |
| 30: | PCS | 40: | Grid |
| 50: | Load | 100: | Battery System |
| 110: | upper control apparatus | 120: | lower control apparatus |
| 111, 121: | memory | 112, 122: | processor |
| 113, 121: | transceiver | 114, 124: | input interface |
| 115, 125: | output interface | 116, 126: | storage device |

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

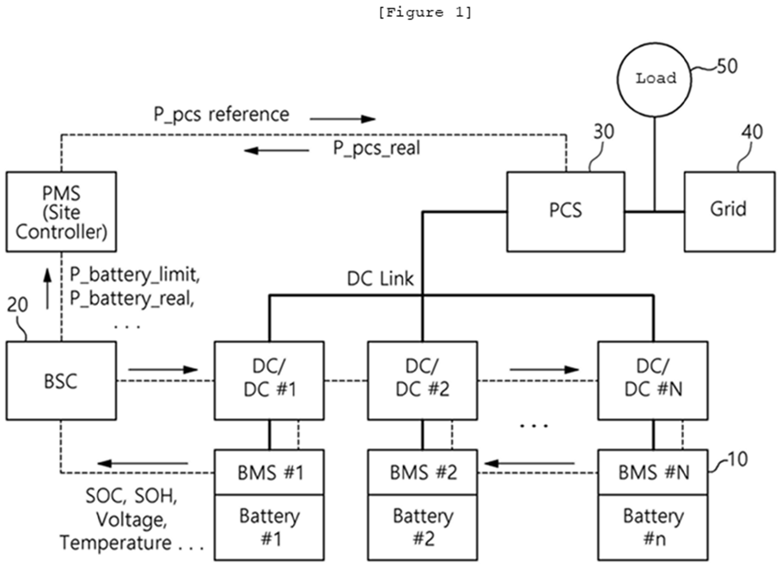

FIG. 1 is a block diagram of an energy storage system to which the present invention may be applied.

Referring to FIG. 1, the minimum unit of a battery that performs a role of storing power in an energy storage system (ESS) is typically a battery cell.

In general, a series/parallel combination of battery cells form a battery pack, and a plurality of battery packs may form a battery rack. In other words, a battery rack may be a basic unit of a battery system as a series/parallel combination of battery packs. Here, depending on a device or system in which the battery is applied, a battery pack may be referred to as a battery module.

In addition, a plurality of battery racks may be connected in parallel to form a battery bank. For example, Battery #1, Battery #2, ..., Battery #N illustrated in FIG. 1 may be in the form of battery racks.

Here, a battery management system (BMS) 10 may be installed in each battery. The battery management apparatus 10 monitors current, voltage, and temperature of each battery pack (or rack) to be managed, calculates a State Of Charge (SOC) based on the monitoring results, and controls charging and discharging.

Meanwhile, a battery system controller (BSC) 20 may be installed in each battery system configured to include a plurality of batteries and peripheral circuits, devices, etc. Accordingly, the battery system controller 20 may monitor and control targets such as voltage, current, temperature, circuit breakers, etc. within the battery system.

An inverter (Power Conditioning System; PCS) 30 may control power supplied from the grid 40 and power supplied from the battery 10 in order to supply power required from the load 50. For example, the inverter 30 may be provided as a DC-AC inverter.

Meanwhile, communication can be made between the battery, battery management apparatus 10, inverter 30, grid 40, and load 50 using Controller Area Network(CAN) or Ethernet.

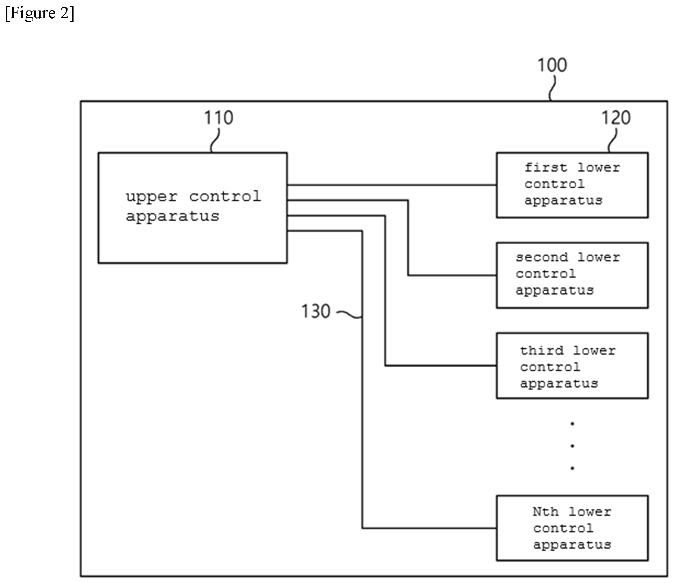

FIG. 2 is a block diagram of a battery system according to embodiments of the present invention.

Referring to FIG. 2, the battery system 100 may include an upper control apparatus 110 and a plurality of lower control apparatuses 120. For example, the plurality of lower control apparatuses 120 may include a first lower control apparatus to Nth lower control apparatuses.

In addition, the battery system 100 may include a communication cable 130 connecting each of the upper control apparatus 110 and the plurality of lower control apparatuses 120. However, without being limited to what has been disclosed, the upper control apparatus 110 and the plurality of lower control apparatuses 120 in the battery system 100 may be interconnected by transmitting and receiving a physical internal signal (Hardwired Signal). For example, the internal signal may be a voltage signal.

According to embodiments, the upper control apparatus 110 may control operations of the plurality of lower control apparatuses 120. For example, the upper control apparatus 110 may be a battery system controller (BSC) or a bank battery management system (Bank BMS).

Meanwhile, in order for the upper control apparatus 110 to control the operation of the plurality of lower control apparatuses 120, a unique identifier must be assigned to each of the plurality of lower control apparatuses 120.

Accordingly, the upper control apparatus 110 may sequentially transmit identifier assignment commands to the plurality of lower control apparatuses 120 via a communication cable 130 or a physical internal signal (Hardwired Signal) when the battery system 100 is initialized. Accordingly, the upper control apparatus 110 may assign an identifier to each of the lower control apparatuses 120 that are sequentially activated.

Thereafter, the upper control apparatus 110 may sequentially transmit an initialization command signal to each of the plurality of lower control apparatuses 120 through a communication cable 130 or an internal signal (Hardwired Signal). Accordingly, the plurality of lower control apparatuses 120 may be sequentially initialized and thus linked to the battery system 100.

Meanwhile, the lower control apparatus 120 may manage a battery corresponding to the lower control apparatus 120 and be controlled by the upper control apparatus 110.

In more detail, the lower control apparatus 120 may include a plurality of lower control apparatuses, and each of the lower control apparatuses 120 manages and controls operation of a corresponding battery among the plurality of batteries. Here, a plurality of batteries may be provided in a parallel-connected structure. For example, the battery may be provided as a battery rack including a plurality of battery modules. Accordingly, the lower control apparatus 120 may be provided as a battery rack management device (Rack BMS) that manages a battery rack.

The lower control apparatus 120 may be initialized for interworking with the upper control apparatus 110 when the battery system 100 is initialized.

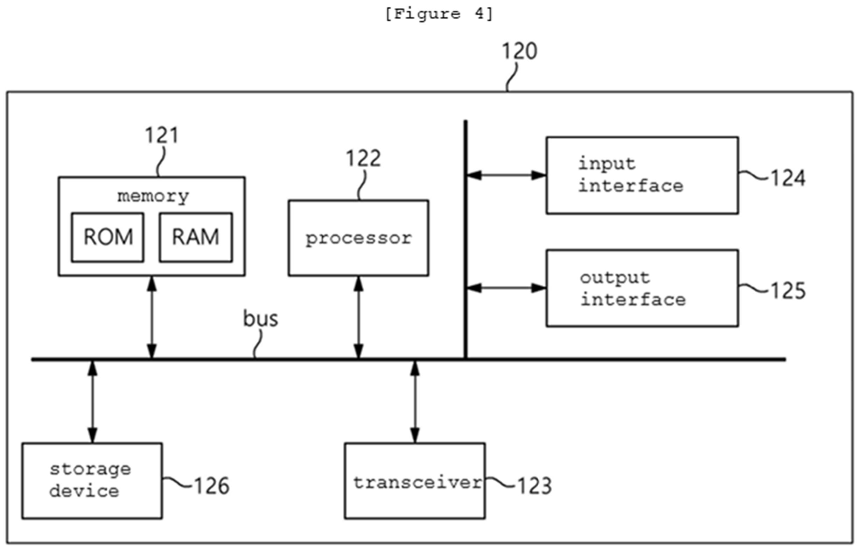

According to an embodiment, the lower control apparatus 120 may be assigned with an identifier by an identifier assignment command from the upper control apparatus 110. Here, the lower control apparatus 120 may store information on the assigned identifier in a separate storage space. For example, the storage space may be a non-volatile memory (Flash memory) and may be provided as a storage device 126 in FIG. 4 described below.

Thereafter, the lower control apparatus 120 may be initialized by an initialization command of the upper control apparatus 110. Accordingly, the lower control apparatus 120 may be interworking with the battery system 100 through the upper control apparatus 110.

Meanwhile, the lower control apparatus 120 may be unintentionally reset during the operation of the battery system 100 after the initialization is completed.

Here, the lower control apparatus 120 may check the identifier stored in the storage space in order to reset the identifier according to another embodiment.

Here, the identifier may be a unique identifier of the lower control apparatus 120 assigned by the upper control apparatus 110 when the battery system 100 is initialized. Thereafter, the lower control apparatus 120 may perform initialization on its own without an initialization command from the upper control apparatus 110.

In summary, the battery system 100 according to embodiments of the present invention may pre-store identifier information assigned when the battery system 100 is initialized, in a storage space, so that even if the lower control apparatus 120 is unexpectedly reset due to an abnormality in hardware or software after the initialization of the battery system 100, the identifier pre-stored in the storage space may be redetermined as the identifier of the lower control apparatus 120. Accordingly, the battery system 100 can reset the identifier of the corresponding lower control apparatus 120 without re-initializing the entire battery system 100, thereby enabling communication connection between the upper control apparatus 110 and the corresponding lower control apparatus 120.

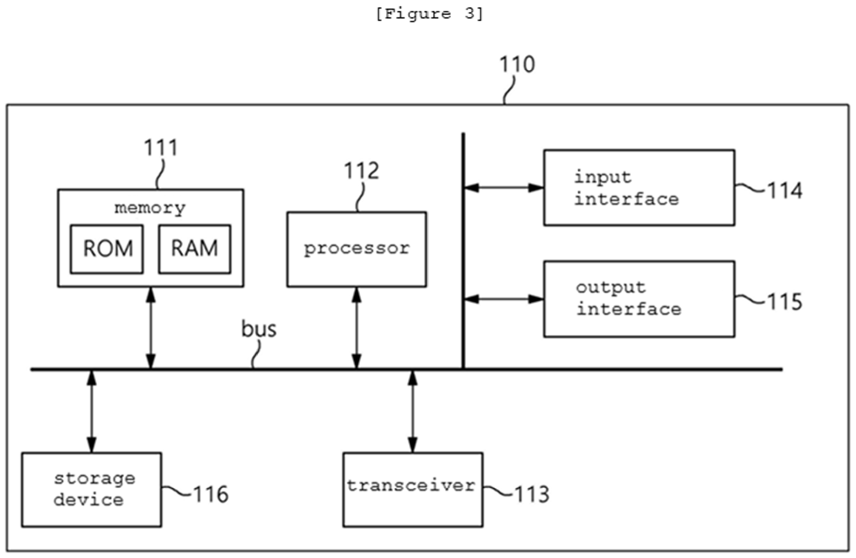

FIG. 3 is a block diagram of an upper control apparatus according to embodiments of the present invention.

Referring to FIG. 3, each of the upper control apparatuses 110 may include a memory 111, a processor 112, a transceiver 113, an input interface device 114, an output interface device 115, and a storage device 116.

According to the embodiment, each of the components 111, 112, 113, 114, 115, 116 included in the upper control apparatus 110 may be connected by a bus to communicate with each other. Here, the bus may be a CAN bus.

Among the components 111, 112, 113, 114, 115, 116 of the upper control apparatus 110, the memory 111 and the storage device 116 may be configured as at least one of a volatile storage medium and a nonvolatile storage medium. For example, the memory 111 and the storage device 116 may be configured with at least one of a read-only memory (ROM) and a random access memory (RAM).

Among these, the memory 111 may include at least one instruction executed by the processor 112.

According to embodiments, the at least one instruction in the upper control apparatus 110 may include an instruction to transmit an identifier allocation command to each of the plurality of lower control apparatuses 120 when the battery system 100 is in an uninitialized state.

Thereafter, the at least one instruction may include an instruction to transmit an initialization command to each of the lower control apparatuses 120.

Thereafter, the at least one instruction may further include an instruction to individually receive battery information from the plurality of lower control apparatuses 120 in the battery system 100 when the initialization of the lower control apparatuses 120 is completed and an instruction to compare information of a specific battery corresponding to the lower control apparatus 120 whose initialization is completed with the battery information, to control the specific battery to be charged or discharged. For example, the upper control apparatus 110 may control the specific battery to be charged when the voltage of the battery corresponding to the lower control apparatus 120 falls within a threshold range defined based on the voltages of the plurality of batteries corresponding to the lower control apparatuses 120 excluding the specific battery.

The processor 112 may mean a central processing unit (CPU), a graphics processing unit (GPU), or a dedicated processor on which the methods according to embodiments of the present invention are performed.

The processor 112 may execute at least one program command stored in the memory 111, as described above.

FIG. 4 is a block diagram of a lower control apparatus according to embodiments of the present invention.

Referring to FIG. 4, the lower control apparatus 120 may include a memory 121, a processor 122, a transceiver 123, an input interface device 124, an output interface device 125, and a storage device 126.

According to embodiments, each of the components 121, 122, 123, 124, 125, 126 included in the lower control apparatus 120 may be connected by a bus to communicate with each other. Here, the bus may be a CAN bus.

Among the components 121, 122, 123, 124, 125, 126 of the lower control apparatus 120, the memory 121 and the storage device 126 may be configured as at least one of a volatile storage medium and a nonvolatile storage medium. For example, the memory 121 and the storage device 126 may be configured as at least one of a read-only memory (ROM) and a random access memory (RAM).

Among these, the memory 121 may include at least one instruction executed by the processor 122.

According to embodiments, the at least one instruction may include an instruction to check operating state of the battery system 100 and an instruction to perform initialization by itself and to set an identifier pre-stored in a storage space when the battery system 100 is initialized and in operation. For example, the storage space may be the storage device 126.

Here, the identifier may be an identifier assigned when the battery system 100 is initialized.

Meanwhile, the at least one instruction may further include an instruction to receive an initialization command from the upper control apparatus 110 when the battery system 100 is not in operation and perform initialization.

More specifically, the lower control apparatus 120 may be assigned an identifier from the upper control apparatus 110 when the battery system 100 is not in operation, and may perform initialization by an initialization command from the upper control apparatus 110.

In addition, the at least one instruction may include an instruction to update and store the identifier assigned from the upper control apparatus 110 in the storage space.

Meanwhile, the initialization command may be transmitted from the upper control apparatus 110 after the identifier assignment of the lower control apparatuses 120 by the upper control apparatus 110 is completed.

In addition, the lower control apparatus 120 may receive at least one instruction from the upper control apparatus 110 through a physical internal signal (Hardwired Signal) or a communication signal.

In addition, the plurality of batteries may be provided in a structure in which they are connected in parallel.

The processor 122 may mean a central processing unit (CPU), a graphics processing unit (GPU), or a dedicated processor on which methods according to embodiments of the present invention are performed.

As described above, the processor 122 may execute at least one program command stored in the memory 121.

The configurations of the battery system according to embodiments of the present invention have been described above. Below, a interworking method of lower control apparatuses in the battery system will be described in detail.

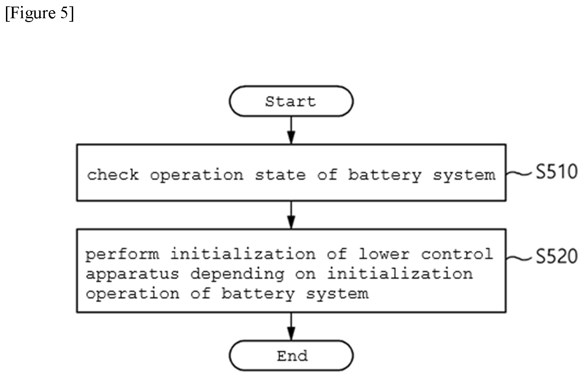

FIG. 5 is a flowchart for explaining an interworking method in a battery system according to embodiments of the present invention.

Referring to FIG. 5, the lower control apparatus 120 may check an operation state of the battery system 100 (S510).

According to embodiments, the lower control apparatus 120 may check the operation state before and after the initialization of the battery system 100 depending on whether or not a state information signal transmitted from the upper control apparatus 110 is received.

More specifically, the state information signal may be a signal transmitted from the upper control apparatus 110 to the lower control apparatus 120 after the initialization of the battery system 100 is completed.

According to an embodiment, if the lower control apparatus 120 does not receive the state information signal because the state information signal is not transmitted from the upper control apparatus 110, the lower control apparatus 120 may determine that initialization of the battery system 100 has not been performed.

According to another embodiment, when the lower control apparatus 120 receives a state information signal transmitted from the upper control apparatus 110, the lower control apparatus 120 may determine that initialization of the battery system 100 is completed. In other words, when the lower control apparatus 120 receives a state information signal from the upper control apparatus 110, the lower control apparatus 120 may determine that the battery system 100 is in operation.

Thereafter, the lower control apparatus 120 may perform initialization depending on the initialization operation of the battery system 100 (S520).

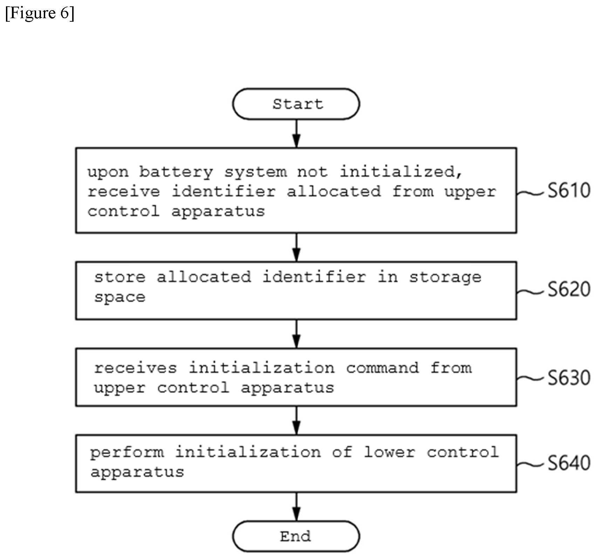

FIG. 6 is a flowchart for explaining an interworking method in a battery system when the battery system is in an uninitialized state according to embodiments of the present invention.

Referring to FIG. 6, when the battery system 100 is in an uninitialized state, in other words, when it is determined that the initialization of the battery system 100 is not performed, the lower control apparatus 120 may wait until an identifier allocation command is received from the upper control apparatus 110.

Thereafter, when an identifier is allocated from the upper control apparatus 110 (S610), the lower control apparatus 120 may store the allocated identifier in a separate storage space (S620).

Thereafter, the lower control apparatus 120 may wait until an initialization command is received from the upper control apparatus 110. Here, the initialization command may be sequentially transmitted from the upper control apparatus 110 to each of the lower control apparatuses 120, when the identifier allocation is completed for the plurality of lower control apparatuses 120 within the battery system 100.

Thereafter, when the lower control apparatus 120 receives the initialization command from the upper control apparatus 110 (S630), the lower control apparatus 120 may perform initialization using the identifier pre-stored in the storage space (S640).

Thereafter, when the initialization of the plurality of lower control apparatuses 120 is completed, the initialization of the battery system 100 may be completed.

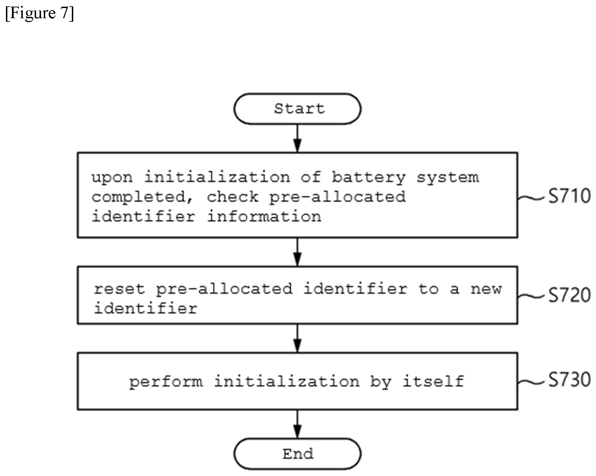

FIG. 7 is a flowchart for explaining an interworking method in a battery system when the initialization of the battery system is completed according to embodiments of the present invention.

Referring to FIG. 7, when it is in a state that the initialization of the battery system 100 is completed, the lower control apparatus 120 may determine that the corresponding lower control apparatus 120 is currently in a state of having been reset due to a hardware or software abnormality.

Accordingly, the lower control apparatus 120 may check identifier information pre-allocated to the lower control apparatus 120 when the battery system 100 is initialized (S710). Here, the pre-allocated identifier information may be stored in a separate storage space.

Thereafter, the lower control apparatus 120 may reset the pre-allocated identifier information as a new identifier of the lower control apparatus 120 (S720).

Afterwards, the lower control apparatus 120 may be linked with the upper control apparatus 110 by performing initialization by itself (S730) without an initialization command from the upper control apparatus 110.

In summary, the battery system 100 according to the embodiments of the present invention may reset its own identifier by using identifier information pre-stored in the corresponding lower control apparatus 120 and perform initialization by itself, when the lower control apparatus 120 is reset due to an unexpected abnormality. Therefore, the battery system 100 according to the embodiments of the present invention can enable communication between the upper control apparatus 110 and a plurality of lower control apparatuses 120, by performing identifier allocation for the lower control apparatus 120 that has been reset, without initializing the entire battery system 100.

In addition, after the initialization of the lower control apparatus 120 is completed, the upper control apparatus 110 may individually receive battery information from the plurality of lower control apparatuses 120 in the battery system 100. Here, the battery information may be real-time voltage value information of the plurality of batteries individually connected to the plurality of lower control apparatuses 120. For example, the battery information may be state of charge (SOC) information of each of the plurality of batteries.

Thereafter, the upper control apparatus 110 may compare the battery information of the lower control apparatus 110 that has completed initialization with the battery information of the plurality of lower control apparatuses 110 excluding the lower control apparatus 110 that has completed initialization, and perform charge/discharge control on a specific battery corresponding to the lower control apparatus 110 that has completed initialization.

For example, the upper control apparatus 110 may check a charge state of a specific battery corresponding to the specific lower control apparatus 120 that has completed initialization.

Thereafter, the upper control apparatus 110 may control a switch of the battery protection unit (BPU) in the lower control apparatus 120 that is in the OFF state to the ON state when the charge state of the specific battery is within a predetermined range based on the charge states of the plurality of batteries. Accordingly, the specific battery corresponding to the specific lower control apparatus 120 that has completed initialization can be charged.

The battery system and the interworking method in the battery system according to the embodiment of the present invention have been described above.

The battery system and the interworking method in the battery system according to the embodiment of the present invention can re-link a lower control apparatus with the upper control apparatus in the battery system when the lower control apparatus is reset due to an unexpected abnormality, by initializing the lower control apparatus by itself using the identifier information pre-stored in the corresponding lower control apparatus, without initializing the entire battery system.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that may be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery system comprising:
a plurality of lower control apparatuses that individually control a plurality of batteries; and
an upper control apparatus that manages the plurality of lower control apparatuses,
wherein at least one of the plurality of lower control apparatuses determines an operation state of the battery system, and
upon the battery system initialized and in operation, performs initialization by itself and set an identifier for itself which is pre-stored in a storage space.

2. The system of claim 1, wherein the identifier is an identifier assigned when the battery system is initialized.

3. The system of claim 1, wherein the lower control apparatus receives an initialization command from the upper control apparatus and performs initialization, when the battery system is in an uninitialized state.

4. The system of claim 3, wherein the lower control apparatus receives an identifier assigned from the upper control apparatus when the battery system is in the uninitialized state and performs initialization by the initialization command from the upper control apparatus.

5. The system of claim 4, wherein the lower control apparatus updates and stores the identifier assigned from the upper control apparatus in the storage space.

6. The system of claim 1, wherein the initialization command is transmitted from the upper control apparatus after identifier assignment of the lower control apparatuses by the upper control apparatus is completed.

7. The system of claim 3, wherein the lower control apparatus receives at least one command from the upper control apparatus through a physical internal signal (hardwired signal) or a communication signal.

8. The system of claim 1, wherein the upper control apparatus individually receives battery information from the lower control apparatuses in the battery system when the initialization of the lower control apparatuses is completed, and
compares information of a specific battery corresponding to the lower control apparatus whose initialization is completed, with the battery information of the lower control apparatuses, and controls the specific battery to be charged or discharged.

9. The system of claim 8, wherein the upper control apparatus controls the specific battery to be charged when a voltage of the battery corresponding to the lower control apparatus is within a predetermined threshold range based on voltages of the plurality of batteries corresponding to a plurality of lower control apparatuses excluding the battery corresponding to the lower control apparatus.

10. The system of claim 1, wherein the plurality of batteries is provided in a structure connected in parallel.

11. An interworking method in a battery system including a plurality of lower control apparatuses and an upper control apparatus that manages the plurality of lower control apparatuses, the method comprising:
determining, by at least one of the plurality of lower control apparatuses, an operation state of the battery system, and
upon the battery system initialized and in operation, performing, by the at least one of the plurality of lower control apparatuses, initialization by itself and setting an identifier for itself which is pre-stored in a storage space.

12. The method of claim 11, wherein the identifier is an identifier assigned when the battery system is initialized.

13. The method of claim 11, further comprising:
receiving an initialization command from the upper control apparatus when the battery system is in an uninitialized state and performing, by the lower control apparatus, initialization.

14. The method of claim 13, wherein the performing, by the lower control apparatus, initialization includes:
receiving an identifier assigned from the upper control apparatus when the battery system is in the uninitialized state; and
performing, by the lower control apparatus, initialization by the initialization command from the upper control apparatus.

15. The method of claim 14, wherein the performing, by the lower control apparatus, initialization includes:
updating and storing, by the lower control apparatus, the identifier assigned from the upper control apparatus in the storage space.

16. The method of claim 11, wherein the initialization command is transmitted from the upper control apparatus after identifier assignment of the lower control apparatuses by the upper control apparatus is completed.

17. The method of claim 13, wherein the lower control apparatus receives at least one command from the upper control apparatus through a physical internal signal (hardwired signal) or a communication signal.

18. The method of claim 11, further comprising:
when the initialization of the lower control apparatuses is completed, receiving, by the upper control apparatus individually, battery information from the lower control apparatuses in the battery system, and
comparing, by the upper control apparatus, information of a specific battery corresponding to the lower control apparatus whose initialization is completed, with the battery information of the lower control apparatuses, and controlling the specific battery to be charged or discharged.

19. The method of claim 18, wherein the controlling the specific battery includes:
controlling the specific battery to be charged when a voltage of the battery corresponding to the lower control apparatus is within a predetermined threshold range based on voltages of the plurality of batteries corresponding to a plurality of lower control apparatuses excluding the battery corresponding to the lower control apparatus.

20. The method of claim 11, wherein the plurality of batteries is provided in a structure connected in parallel.
